# EUROPÄISCHE PATENTANMELDUNG

(11) **EP 0 960 920 A1**
(43) Veröffentlichungstag der Anmeldung: **01.12.1999**
(21) Anmeldenummer: 99110032.2
(22) Anmeldetag: 21.05.1999
(51) Int. Cl.: C09D 157/00

(54) **Korrosionsschutz-Beschichtungsmittel**

(30) Priorität: 29.05.1998 DE 19824088
(71) Anmelder: BASF AKTIENGESELLSCHAFT, 67056 Ludwigshafen (DE)
(72) Erfinder: Schlarb, Bernhard Dr., 67067 Ludwigshafen (DE); Wiese, Harm Dr., 69115 Heidelberg (DE); Rau, Maria Gyopar Dr., 67454 Hassloch (DE); Schupp, Eberhard Dr., 67269 Grünstadt (DE)

(57) **Zusammenfassung**

Verwendung einer Wäßrigen Polymerdispersion, erhältlich durch radikalische Polymerisation eines Monomerengemisches A) in wäßriger Emulsion in Gegenwart eines polymeren Schutzkolloids B), aufgebaut aus:
- 5 bis 50 Gew.-% mindestens eines ethylenisch ungesättigten Monomeren mit mindestens einer ionischen oder in eine ionische Gruppe überführbaren Gruppe (Monomere I),
- 0,1 bis 95 Gew.-% mindestens eines (Meth)acrylsäureesters eines aliphatischen Alkohols mit mindestens 10 C-Atomen (Monomere II),
- 0 bis 94,9 Gew.-% sogenannter Hauptmonomere, ausgewählt aus C₁-C₉-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen (Monomere III) und
- 0 bis 60 Gew.-% weiterer Monomere (Monomere IV),
wobei sich die Gewichtsangaben auf das polymere Schutzkolloid beziehen, als Korrosionsschutz-Beschichtungsmittel.

## Beschreibung

Die Erfindung betrifft Korrosiotisschutz-Beschichtungsmittel, auf Basis wäßriger Polymerdispersionen, welche in Gegenwart eines Schutzkolloids durch Emulsionspolymerisation erhältlich sind.

Korrosionsschutz-Beschichtungsmittel enthalten üblicherweise aktive Korrosionsschutz-Pigmente und ein Bindemittel. Gewünscht sind Bindemittel, welche auch ohne Zusatz von Korrosionsschutz-Pigmenten bereits eine Korrosionsschutz-Wirkung haben. Bekannt sind t. B. Bindemittel, welche Monomere mit Phosphatgruppen einpolymerisiert enthalten (s. EP 221 498).

Aus EP 727 441 (O.Z. 45828) sind Emulsionspolymerisate bekannt, welche in Gegenwart eines Schutzkolloids mit C₈-C₁₈-Alkyl(meth)acrylaten als Bestandteil hergestellt werden. Eine Verwendung für Korrosionsschutz-Beschichtungen ist nicht erwähnt.

Aufgabe der vorliegenden Erfindung waren Korrosionsschutz-Beschichtungsmittel, welche auch ohne Korrosionsschutz-Pigmente oder zumindest mit einem geringeren Gehalt dieser Pigmente Korrosionsschutz bewirken.

Demgemäß wurde die Verwendung einer wäßrigen Polymerdispersion, welche erhältlich ist durch radikalische Polymerisation eines Monomerengemisches A) in wäßriger Emulsion in Gegenwart eines polymeren Schutzkolloids B) und aufgebaut ist aus:
- 5 bis 50 Gew.-% mindestens eines ethylenisch ungesättigten Monomeren mit mindestens einer ionischen oder in eine ionische Gruppe überführbaren Gruppe (Monomere I),
- 0,1 bis 95 Gew.-% mindestens eines (Meth)acrylsäureesters eines aliphatischen Alkohols mit mindestens 10 C-Atomen (Monomere II),
- 0 bis 94,9 Gew.-% sogenannter Hauptmonomere, ausgewählt aus C₁-C₉-Alkyl(meth)acrylaten, Vinylestern von bis zu 20 C-Atomen enthaltenden Carbonsäuren, vinylaromaten mit bis zu 20 C-Ato-. men, ethylenisch ungesättigten Nitrilen, Vinylhalogeniden und aliphatischen Kohlenwasserstoffen mit 2 bis 8 C-Atomen und 1 oder 2 Doppelbindungen (Monomere III) und
- 0 bis 60 Gew.-% weiterer Monomere (Monomere IV),
wobei sich die Gewichtsangaben auf das polymere Schutzkolloid beziehen, als Korrosionsschutz-Beschichtungsmittel gefunden.

Die folgenden Ausführungen betreffen bevorzugte Ausführungen der Erfindung.

Der Anteil der Monomeren I am Schutzkolloid B) beträgt insbesondere 10 bis 40 Gew.-%, ganz besonders 10 bis 30 Gew.-%, und der Anteil der Monomeren II insbesondere 50 bis 90 Gew.-%, ganz besonders 60 bis 90 Gew.-%.

Das polymere Schutzkolloid enthält insgesamt als Aufbaukomponenten vorzugsweise 10 bis 40 Gew.-%, der Monomeren I, 50 bis 90 Gew.-% der Monomeren II, 0 bis 40 Gew.-% der Monomeren III und 0 bis 40 Gew.-% der Monomeren IV.

Besonders bevorzugt enthält das polymere Schutzkolloid 10 bis 30 Gew.-% der Monomeren I, 60 bis 90 Gew.-% der Monomeren II, 0 bis 30 Gew.-% der Monomeren III und 0 bis 30 Gew.-% der Monomeren IV.

Die Gewichtsangaben sind jeweils auf das polymere Schutzkolloid bezogen.

Geeignete Monomere I sind insbesondere solche mit mindestens einer Carbonsäure- oder Carbonsäureanhydridgruppe, wie Acrylsäure, Methacrylsäure, Maleinsäure, Fumarsäure, Maleinsäure- bzw. Fumarsäurehalbester, Itaconsäure oder Maleinsäureanhydrid.

Bevorzugte Monomere II sind C₁₀- bis C₁₈-Alkyl(meth)acrylate. Als besonders bevorzugte Monomere II genannte seien z.B. Lauryl(meth)acrylat und Stearyl(meth)acrylat.

Als Monomere III (Hauptmonomere) zu nennen sind z.B. (Meth)acrylsäurealkylester mit einem C₁-C₉-, insbesondere C₁-C₈-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt. Nicht aromatische Kohlenwasserstoffe mit zwei Doppelbindungen sind weniger bevorzugte Hauptmonomere zur Herstellung des Schutzkolloids.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl(meth)acrylaten, insbesondere mit C₁-C₈-Alkyl(meth)acrylaten eingesetzt.

Weitere ethylenisch ungesättigte Monomere (Monomere IV) sind insbesondere Hydroxylgruppen enthaltende Monomere wie Hydroxyalkyl(meth)acrylate, z.B. Hydroxypropyl- oder Hydroxyethyl(meth)acrylat. Phosphatgruppen enthaltende Monomere können mitverwendet werden, bevorzugt sind jedoch Phosphatgruppen enthaltende Monomere nicht im Schutzkolloid und Polymer enthalten. Vernetzende Monomere, Z.B. mit zwei Vinylgruppen können zwar auch mitverwendet werden, vorzugsweise enthält das Schutzkolloid jedoch keine vernetzenden Monomeren oder allenfalls nur geringe Anteile dieser Monomeren, z.B. unter 0,2 Gew.-%, bezogen auf das Schutzkolloid.

Das gewichtsmittlere Molekulargewicht (Mg) des polymeren Schutzkolloids liegt vorzugsweise über 50.000, besonders bevorzugt beträgt es über 50.000 bis 200.000 und ganz besonders bevorzugt 70.000 bis 120.000 (bestimmt durch Gelpermeationschromatographie, mit Polystyrol als Standard und Tetrahydrofuran als Elutionsmittel).

Die Herstellung des polymeren Schutzkolloids kann z.B. durch Substanzpolymerisation, also lösungsmittelfrei oder vorzugsweise durch Lösungspolymerisation erfolgen.

Als Lösungsmittel eignen sich z.B. solche mit einem Siedepunkt unter 100°C bei 1 bar oder solche, die mit Wasser ein Azeotrop bilden, welche aus der wäßrigen Polymerdispersion, soweit gewünscht, leicht destillativ abgetrennt werden können. Als Lösungsmittel können günstigerweise auch sogenannte Filmbildehilfsmittel, wie Butylglycol, Butyldigylcol oder Butoxypropanol verwendet werden. Ein späterer Zusatz dieser Hilfsmittel kann sich so erübrigen.

Als Lösungsmittel genannt seien z.B. Butanol, Isobutanol, Propanol, Ethanol, Methanol und Methylethylketon.

Die Polymerisation der ethylenisch ungesättigten Monomeren kann z.B. in bekannter Weise durch anionische oder vorzugsweise radikalische Polymerisation vorzugsweise in Gegenwart von Initiatoren erfolgen. Als radikalbildende Initiatoren genannt seien z.B. Azobiscarbonsäureamide., Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugsweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Die Herstellung des polymeren Schutzkolloids kann z.B. auch einstufig oder mehrstufig erfolgen. Insbesondere kann z.B. zunächst ein Polymer mit einem hohen Säureanteil und in dessen Gegenwart dann ein Polymer mit einem geringeren Säureanteil (bzw. Säurezahl = 0) hergestellt werden, wie es z.B. in EP-A 320 865 beschrieben ist.

Bei der vorliegenden Erfindung ist jedoch eine solche mehrstufige Herstellung des polymeren Schutzkolloids nicht notwendig, so daß die einstufige Herstellung bevorzugt ist. Bei der Polymerisation können die Monomeren vorgelegt oder auch (bevorzugt) kontinuierlich zudosiert werden.

Nach Herstellung des polymeren Schutzkolloids wird eine Dispersion oder vorzugsweise Lösung des polymeren Schutzkolloids in dem organischen Lösungsmittel erhalten. Der Feststoffgehalt beträgt vorzugsweise 50 bis 95, insbesondere 60 bis 85 Gew.-%.

Das polymere Schutzkolloid wird dann als Schutzkolloid bei der Emulsionspolymerisation verwendet.

Das polymere Schutzkolloid kann dazu in Wasser vorgelegt und/oder zusammen mit zu polymerisierenden Monomeren während der Emulsionspolymerisation dem Wasser zugesetzt werden.

Das Schutzkolloid kann in Form seiner organischen Lösung, z.B. im Falle der Lösungspolymerisation, oder auch lösemittelfrei, z.B. im Falle der Substanzpolymerisation, verwendet werden. Es kann aber auch zunächst in eine wäßrige Dispersion oder Lösung überführt werden, wobei Lösungsmittel gegebenenfalls abdestilliert wird.

Die Säuregruppen bzw. Anhydridgruppen des polymeren Schutzkolloids werden vor oder während der Überführung in die wäßrige Phase ganz oder teilweise in Salzgruppen überführt. Dazu eignen sich Ammoniak oder andere Aminoverbindungen, insbesondere tertiäre Aminoverbindungen, oder anorganische Basen, z.B. NaOH.

Soweit das Schutzkolloid nicht bereits in wäßriger Phase vorliegt und die Überführung in Salzgruppen dementsprechend bereits erfolgt ist, wird die Überführung in Salzgruppen vor oder während der zugabe des Schutzkolloids zum Polymerisationsansatz der Emulsionspolymerisation durchgeführt.

Der Gewichtsanteil des polymeren Schutzkolloids beträgt vorzugsweise 2 bis 40 Gew.-Teile, besonders bevorzugt 5 bis 30 Gew.-Teile, ganz besonders bevorzugt zu 7,5 bis 15 Gew.-%, bezogen auf 100 Gew.-Teile des durch Emulsionspolymerisation erhaltenen Polymeren (d.h. auf die Summe aus polymerisierten Monomeren A) und Schutzkolloid B)).

Bei der Emulsionspolymerisation werden keine weiteren Emulgatoren, Schutzkolloide oder sonstige Dispergierhilfsmittel mehr benötigt und daher vorzugsweise auch nicht eingesetzt.

Bei den zu polymerisierenden Monomeren (Monomerengemisch A)) handelt es sich im wesentlichen um die Bereits voranstehend genannten Monomere I bis IV, wobei als Monomere III auch aliphatische Kohlenwasserstoffe mit 2 bis 8 C-Atomen und zwei Doppelbindungen und als Monomere IV auch vernetzende Monomere, wie Butandioldiacrylat und Divinylbenzol geeignet sind.

Das Monomerengemisch A) besteht vorzugsweise zu 0 bis 100, besonders bevorzugt zu 40 bis 100 Gew.-%, ganz besonders bevorzugt zu 70 bis 100 Gew.-%, aus den Monomeren III (Hauptmonomere).

Besonders bevorzugte Hauptmonomere sind die obengenannten C₁-C₉ Alkyl(meth)acrylate oder Mischungen der Alkyl(meth)aerylate mit Styrol.

Monomere I und II können, müssen jedoch keinesfalls, mitverwendet werden, ihr Anteil liegt jedoch im allgemeinen jeweils unter 10 Gew.-%, bevorzugt unter 5 Gew.-% und besonders bevorzugt unter 3 Gew.-%.

Weitere Monomere IV können ebenfalls mitverwendet werden. z.B. in Mengen von 0 bis 100 Gew.-%, bevorzugt 0 bis 60 Gew.-%, ganz besonders bevorzugt zu 0 bis 30 Gew.-%. Die Gewichteangaben sind auf das Monomerengemisch bezogen.

Die Emulsionspolymerisation kann in üblicher Weise z.B. bei Temperaturen von 30 bis 95°C in Gegenwart eines wasserlöslichen Initiators durchgeführt werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Im Falle von Wasserstoffperoxid als Initiator werden vorzugsweise geringe Mengen Cu(II) oder Fe(III) als Katalysator mitverwendet.

Die nach der Emulsionspolymerisation erhaltene wäßrige Polymerdispersion hat vorzugsweise einen Feststoffgehalt von 10 bis 65, vorzugsweise von 30 bis 60, und besonders bevorzugt von 40 bis 55 Gew.-%.

Die Glasübergangstemperatur Tg des erhaltenen Polymeres liegt vorzugsweise im Bereich von -60 bis 140°C, besonders bevorzugt im Bereich von 0 bis 70°C (berechnet nach Fox, Bull. Physics Soc. 1, 3 (1956), S. 123).

Die wäßrigen Dispersionen werden als Korrosionsschutz-Beschich-tungsmittel verwendet. Sie können für die Verwendung übliche Zusatzstoffe enthalten, z.B. Entschäumer, Verlaufamittel, Füllstoffe oder Farbstoffe, Verdickungsmittel und Korrosionsschutz-Pigmente. Zu den Korrisonsschutz-Pigmenten gehören Barriere-Pigmente, wie Eisenglimmer oder Aluminium-Pigmente, welche die Diffusion von Wasser oder Sauerstoff in die Lackschicht behindern. Zu den Korrosionsschutz-Pigmenten gehören insbesondere auch sog. aktive Korrosionsschutz-Pigmente, welche den Korrosionsprozess elektrochemisch unterbinden. Als letztere genannt sei z.B. Zinkphosphat.

Der Gehalt an Korrosionsschutz-Pigmenten beträgt z.B. 0 bis 50 Gew.-Teile, bezogen auf 100 Gew.-Teile Polymer. Auch ohne Korrosionsschutz-Pigmente wird guter Korrosionsschutz erreicht. Der Zusatz von aktiven Korrosionsschutz-Pigmenten oder Korrosionsschutz-Pigmenten generell ist daher nicht erforderlich.

Die Korrosionsschutz-Beschichtungsmittel können auf unterschiedlichste Substrate aus Metall aufgebracht werden. In Betracht kommen z.B. Eisen, Stahlblech, Aluminium, verzinkte Oberflächen.

Die Trocknung der Beschichtung kann durch Temperaturerhöhung z.B. auf 40 bis 70°C beschleunigt werden. Die erhaltenen Beschichtungen haben vorzugsweise eine Schichtdicke von 40 bis 100 µm .

Die erfindungsgemäßen Korrosionsschutz-Beschichtungsmittel bewirken auch ohne Korrosionsschutz-Pigmente einen guten Korrosionsschutz.

### Beispiele

### Herstellung des polymeren Schutzkolloids B) durch Lösungspolymerisation (s. Tabelle 1):

In einem Glaskolben, der mit Rückflußkühler, Ankerrührer, 2 Tropftrichtern und thermostatisierten Ölbad ausgestattet war, wurde die Vorlage in einer Stickstoffatmosphäre unter Rühren auf eine Temperatur von 105°C aufgeheizt. Nach Erreichen dieser Polymerisationstemperatur wurde der Zulauf 2 gestartet und innerhalb von 6 Stunden zudosiert. 15 min nach dem Start von Zulauf 2 wurde der Rest von Zulauf 1 gestartet und innerhalb von 4 Stunden zudosiert. Nachdem der Zulauf 2 vollständig zudosiert worden war, wurde zur vervollständigung der Polymerisation noch 2 Stunden bei 105°C weitergerührt. Dann wurde die Polymerlösung auf 80°C abgekühlt und durch Einrühren von zulauf 3 innerhalb von 20 min neutralisiert. Anschließend wurde bei einer konstanten Außentemperatur von 80°C der Zulauf 4 innerhalb von 1 Stunde eingerührt.

### Herstellung der wäßrigen Dispersion durch Emulsionspolymerisation (s. Tabelle 2):

Die Vorlage wurde unter Stickstoff auf die Polymerisations-temperatur von 85°C erhitzt. Währenddessen wurde zulauf 1 innerhalb von 15 min zudosiert. Dann wurden 8,5 g von Zulauf 3 innerhalb von 2 min zugegeben. Dann wurden die Zuläufe 2 und 3 gestartet. Zulauf 2 wurde innerhalb von 2 Stunden und Zulauf 3 innerhalb von 2,5 Stunden zudosiert. Anschließend wurde noch 1 stunde lang bei der Polymerisationstemperatur weitergerührt. Dann wurde die Dispersion filtriert (500 µm Maschenweite).

### Beispiele

**Tabelle 1**

| Synthese des polymeren Schutzkolloide B) | | | | |
|---|---|---|---|---|
| Schutzkolloid | V1 Vergleich | V2 Vergleich | 1 | 2 |
| | | | | |

| Zusammensetzung in Gew.-%: | | | | |
|---|---|---|---|---|
| Acrylsäure | 20 | 30 | -- | 30 |
| Methacrylsäure | -- | -- | 30 | -- |
| Laurylacrylat | -- | -- | 70 | 70 |
| Styrol | 80 | 70 | -- | -- |
| | | | | |

| Vorlage: | | | | |
|---|---|---|---|---|
| Isobutanol | 140 g | 140 g | 136 g | 136 g |
| Teilmenge von Zulauf 1 | 144 g | 144 g | 144 g | 72 g |
| | | | | |

| Zulauf 1: | | | | |
|---|---|---|---|---|
| Acrylsäure | 160 g | 240 g | -- | 240 g |
| Methacrylsäure | -- | -- | 240 g | -- |
| Styrol | 640 g | 560 g | -- | -- |
| Laurylacrylat | -- | -- | 560 g | 560 g |
| | | | | |

| Zulauf 2: | | | | |
|---|---|---|---|---|
| Isobutanol | 240 g | 240 g | 192 g | 192 g |
| tert.-Butylperoctoat | 16 g | 16 g | 16 g | 16 g |
| | | | | |

| Zulauf 3: | | | | |
|---|---|---|---|---|
| Wäßrige Ammoniaklösung (25 gew.-%ig) | 151 g | 227 g | 190 g | 227 g |
| | | | | |

| Zulauf 4: | | | | |
|---|---|---|---|---|
| Wasser | 1300 g | 1300 g | 1600 g | 1600 g |
| | | | | |

| Dispergat: | | | | |
|---|---|---|---|---|
| Feststoffgehalt [%] | 31,6 | 30,0 | 25,5 | 26,8 |
| pH-Wert | 8,1 | 7,6 | 7,3 | 9,1 |
| Isobutanolgehalt [%] | 14,4 | 14,3 | 11,2 | 11,0 |

**Tabelle 2**

| Synthese der wäßrigen Polymerdispersionen | | | | | | |
|---|---|---|---|---|---|---|
| Beispiel | D1 Vergleich | D2 Vergleich | D3 Vergleich | D4 Vergleich | D5 | D6 |
| | | | | | | |

| Vorlage: | | | | | | |
|---|---|---|---|---|---|---|
| Schutzkolloidlösung V1 | 237,5 g | 237,5 g | -- | -- | -- | -- |
| Schutzkolloidlösung V2 | -- | -- | 250 g | 167 g | | -- |
| Schutzkolloidlösung 1 | -- | -- | -- | -- | 196,1 g | -- |
| Schutzkolloidlösung 2 | -- | -- | -- | -- | -- | 186,6 g |
| | | | | | | |

| Zulauf 1: | | | | | | |
|---|---|---|---|---|---|---|
| Wasser | 450 g | 400 g | 450 g | 500 g | 400 g | 400 g |
| Kupfervitriol | 0,01 g | 0,01 g | 0,01 g | 0,01 g | 0,01 g | 0,01 g |
| | | | | | | |

| Zulauf 2: | | | | | | |
|---|---|---|---|---|---|---|
| n-Butylacrylat | 201 g | 225 g | 201 g | 213 g | 225 g | 225 g |
| Styrol | 224 g | 200 g | 224 g | 237 g | 225 g | 225 g |
| | | | | | | |

| Zulauf 3: | | | | | | |
|---|---|---|---|---|---|---|
| Wasserstoffperoxid (12 %ig) | 42 g | 42 g | 42 g | 42 g | 41,5 g | 41,5 g |
| | | | | | | |
| Dispersion: | | | | koaguliert | | |
| | | | | | | |
| Feststoffgehalt [%] | 43,3 | 45,2 | 39,7 | -- | 45,0 | 41,7 |
| pH-Wert | 8,6 | 8,5 | 8,0 | -- | 9,0 | 8,2 |
| Isobutanolgehalt [%] | 3,0 | 3,3 | 3,1 | -- | 2,0 | 1,7 |
| LD-Wert | 38,0 | 32,0 | 15,0 | -- | 58,0 | 34,0 |
| Viskosität [mPas] | <100,0 | 140,0 | pastös | -- | <100,0 | 1000,0 |

Die beiden Vergleichs-Dispersionen D3 und D4, die mit dem Stabilisator Nr. V2 hergestellt worden waren, waren als Lackbindemittel unbrauchbar (koaguliert).

Ebenso unbrauchbar waren Dispersionen, die mit 10 Gew.-% des Stabilisators V1-V2 hergestellt worden waren, daher wurde bei D1 und D2 ein Gehalt von 15 % Schutzkolloid eingestellt.

**Tabelle 3**

| Formulierung der Korrosionsschutz-Beschichtungsmittel Angegebene Mengen sind Gewichtsteile | | | | |
|---|---|---|---|---|
| Polymerdispersion | D1 Vergleich | D2 Vergleich | D5 | D6 |
| Dispersion | 103,8 | 99,5 | 99,9 | 107,8 |
| Surfinol 104 ¹⁾ | | | | |
| 50 %ig in n-Propanol | 1,3 | 1,2 | 1,2 | 1,2 |
| Agitan 260 ²⁾ | 0,6 | 0,6 | 0,6 | 0,6 |
| Wasser | -- | -- | 11,7 | 11,7 |
| Pigmentverteiler (LR 8807) | 1,46 | 1,46 | 1,46 | 1,46 |
| Wäßr. Ammoniaklsg. | 1,85 | 1,65 | 2,2 | 3,1 |
| (25 %ig) | | | | |
| Aerosil ³⁾ | 0,48 | 0,48 | 0,48 | 0,48 |
| Bayferrox 130 M ⁴⁾ | 29,9 | 29,9 | 29,9 | 29,9 |
| Millicarb ⁵⁾ | 47,8 | 47,8 | 47,8 | 47,8 |
| Wasser | -- | -- | 5,6 | 33,7 |

| Die Zutaten wurden mit Glasperlen versetzt und 20 min im Dissolver verrührt. Dann wurde folgendes eingerührt: | | | | |
|---|---|---|---|---|
| Dispersion | 51,3 | 49,2 | 49,3 | 53,3 |
| Agitan 260 | 0,6 | 0,6 | 0,6 | 0,6 |
| Wäßr. Ammoniaklsg. (25 %ig) | 1,8 | 0,63 | | |
| Solvesso 100 ⁶⁾ | 3,4 | 3,4 | 3,4 | 3,4 |

| Nach 1 Tag Wartezeit wurde der Lack durch Zugabe von Verdicker und Wasser auf die gewünschte Viskosität von 300 mPas eingestellt: | | | | |
|---|---|---|---|---|
| Polyether-Verdicker Collacral | 0.65 | 0,6 | 1,26 | 1,26 |
| DS 6049 (10 %ig) | | | | |
| Wasser | 38,5 | 37,3 | 6,0 | 24,1 |

| Gegebenenfalls wurde noch ein Filmbildemittel zugesetzt: | | | | |
|---|---|---|---|---|
| Butylglycol | 2,1 | 0 | 0 | 0 |
| | | | | |
| pH-Wen des Lacks | 9,6 | 9,6 | 9,6 | 9,6 |
| | | | | |

| | | | | |
|---|---|---|---|---|
| ¹⁾ Entschäumer (Air Products) | | | | |
| ²⁾ Entschäumer (Münzing Chemie) | | | | |
| ³⁾ Füllstoff (Degussa) | | | | |
| ⁴⁾ Eisenoxid (Bayer AG) | | | | |
| ⁵⁾ Calziumcarbonat (Omya) | | | | |
| ⁶⁾ Filmbildehilfsmittel | | | | |

Die so hergestellten Lacke wurden mit Hilfe einer Handspritzpistole (1,2 mm Düse) durch Spritzen auf STahlbleche aufgetragen, wobei die Trockenschichtdicke des Lacks 80 µm betrug. Die beschichteten Bleche wurden 7 Tage lang bei Raumtemperatur und anschließend 1 Tag bei einer TEmperatur von 50°C getrocknet. Als Substrat diente Eisenblech (St 1405) (gereinigt mit Essigester). Der getrocknete Lack wurde mit Hilfe eines Messers durch Ritzen beschädigt. Der Salzsprühtest erfolgte nach der DIN 53 167. Die Ergebnisse sind in der folgenden Tabelle zusammengestellt:

**Tabelle 4**

| Prüfergebnisse: Salzsprühtest, nach 120 Std. Belastung Schichtdicke: 80 µm (trocken). | | | | |
|---|---|---|---|---|
| Schutzkolloid B) | D1* | D2* | D5 | D6 |
| | | | | |

| Zusammensetzung (Gew.-%) | | | | |
|---|---|---|---|---|
| Acrylsäure | 20 | 20 | | 30 |
| Methacrylsäure | | | 30 | |
| Styrol | 80 | 80 | | |
| Laurylacrylat | | | 70 | 70 |
| | | | | |
| Gew.-Anteil des Schutzkolloids (Gew.-%) | 15 | 15 | 10 | 10 |

| Emulsionspolymerisation: | | | | |
|---|---|---|---|---|
| Monomerengemisch A | | | | |
| Zusammensetzung [Gew.-%) | | | | |
| Styrol | 53 | 47 | 50 | 50 |
| Butylacrylat | 47 | 53 | 50 | 50 |
| | | | | |

| Beurteilung der lackierten Bleche nach 120 h Salzsprühtest: | | | | |
|---|---|---|---|---|
| Blasen [%]^{xx} | 100 | 100 | 0 | 0 |
| | | | | |
| Unterwanderung am Ritz^{xxx} [Note] | 5 | 5 | 3 | 2-3 |
| | | | | |

| | | | | |
|---|---|---|---|---|
| ^{xx} angegeben ist die Fläche in %, welche Blasen aufweist | | | | |
| ^{xxx} Unterwanderung am Ritz: Note 0-5 (beurteilt durch Veränderung der Lackoberfläche am Ritz): 0 = keine Unterwanderung 5 = starke Unterwanderung. | | | | |
| * Vergleich | | | | |

## Patentansprüche

1. Verwendung einer wäßrigen Polymerdispersion, welche erhältlich ist durch radikalische Polymerisation eines Monomerengemisches A) in wäßriger Emulsion in Gegenwart eines polymeren Schutzkolloids B) und aufgebaut ist aus:
- 5 bis 50 Gew.-% mindestens eines ethylenisch ungesättigten Monomeren mit mindestens einer ionischen oder in eine ionische Gruppe überführbaren Gruppe (Monomere I),
- 0,1 bis 95 Gew.-% mindestens eines (Meth)acrylsäureesters eines aliphatischen Alkohols mit mindestens 10 C-Atomen (Monomere II),
- 0 bis 94,9 Gew.-% sogenannter Hauptmonomere, ausgewählt aus C₁-C₉-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen (Monomere III) und
- 0 bis 60 Gew.-% weiterer Monomere (Monomere IV),
wobei sich die Gewichtsangaben auf das polymere Schutzkolloid beziehen, als Korrosionsschutz-Beschichtungsmittel.

2. Verwendung gemäß Anspruch 1, wobei es sich bei Monomeren II um C₁₀-C₁₈-Alkyl(meth)acrylate handelt.

3. Verwendung gemäß Anspruch 1 oder 2, wobei der Anteil der Monomeren II 50 bis 90 Gew.-% beträgt.

4. Verwendung gemäß einem der Ansprüche 1 bis 3, wobei der Anteil des polymeren Schutzkolloids 2 bis 40 Gew.-Teile, bezogen auf 100 Gew.-Teile des durch radikalische Polymerisation in wäßriger Emulsion erhaltenen Polymeren beträgt.

5. Verwendung gemäß einem der Ansprüche 1 bis 4, wobei das nach Emulsionspolymerisation erhaltene Polymer eine Glasübergangstemperatur von 0 bis 70°C hat.

6. Verfahren zur Herstellung von Korrosionsschutz-Beschichtungsmitteln, dadurch gekennzeichnet, daß Monomere in wäßriger Emulsion in Gegenwart eines polymeren Schutzkolloids gemäß einem der Ansprüche 1 bis 4 radikalisch polymerisiert werden.

7. Korrosionsschutz-Beschichtungsmittel, enthaltend eine wäßrige Polymerdispersion gemäß einem der Ansprüche 1 bis 5.

8. Korrosionsschutz-Beschichtungsmittel gemäß Anspruch 7, enthaltend keine aktiven Korrosionsschutz-Pigmente.

9. Korrosionsschutz-Beschichtungen, erhältlich unter Verwendung von Korrosionsschutz-Beschichtungsmitteln gemäß Anspruch 7 oder 8.
